# EUROPEAN PATENT APPLICATION

(11) **EP 4 563 673 A1**
(43) Date of publication of application: **04.06.2025**
(21) Application number: 23846501.7
(22) Date of filing: 25.07.2023
(51) Int. Cl.: C09K 11/00, C09K 11/61, G01T 1/20, G21K 4/00, G01N 23/04, G01N 23/203

(54) **X-RAY FLUORESCENT PLATE, X-RAY DETECTOR, AND X-RAY INSPECTION DEVICE USING SAME**

(30) Priority: 26.07.2022 JP 2022118349
(71) Applicant: Kabushiki Kaisha Toshiba, Tokyo 105-0023 (JP); Toshiba Materials Co., Ltd., Isogo-Ku Yokohama-Shi Kanagawa 235-0032 (JP)
(72) Inventor: OYAIZU, Eiji, Yokohama-shi, Kanagawa 235-0032 (JP); HAYASHI, Makoto, Yokohama-shi, Kanagawa 235-0032 (JP)
(74) Representative: Hoffmann Eitle
(86) International application number: PCT/JP2023/027148
(87) International publication number: WO 2024/024771

(57) **Abstract**

Provided is a fluorescent screen configured to convert X-rays to visible light and including a first layer, a second layer and a third layer provided between the first layer and the second layer and containing a phosphor. The phosphor is formed of europium-activated barium fluorochloride. A weight of the phosphor is greater than or equal to 300 mg/cm² and less than or equal to 600 mg/cm². A total light transmittance of each of the first layer and the second layer for an emission wavelength 380 nm of the phosphor is greater than or equal to 70%.

## Description

### Technical Field

Embodiments described herein relate to an X-ray fluorescent screen, an X-ray detector and an X-ray inspection device using the same.

### Background Art

Transmissive X-ray inspection devices using the transmission of X-rays and Compton scattering X-ray inspection devices using the Compton scattering of X-rays are widely used at airports etc., for counterterrorism. In general, these X-ray inspection devices are configured to perform an inspection by guiding X-rays which passed through the target object or Compton scattering X-rays to an X-ray detector, converting the detection X-rays to visible light by a phosphor, subsequently detecting the intensity of visible light by a photoelectron doubling tube, what is called a photomultiplier, and creating an image of the inside of the baggage in accordance with the intensity.

To increase the accuracy of the baggage inspection, the acquisition of clearer images is necessary. Therefore, the input of visible light having a sufficient intensity to the photomultiplier is required. In order to increase the intensity of visible light, it is important to increase the intensity of X-rays applied to baggage etc., or increase the efficiency of conversion from X-rays to visible light while maintaining a property in which the afterglow is less. If a phosphor having a high conversion efficiency is used when X-rays are converted to visible light, visible light having a high luminance can be obtained, and visible light having a sufficient intensity can be input to the photomultiplier. In other words, if the fluorescent screen emits more visible light by X-ray irradiation, clear images can be obtained in the X-ray inspection device.

### Citation List

### Patent Literatures

Patent Literature 1: JP 2013-851165 A
Patent Literature 2: JP S62-173100 U

### Summary of Invention

### Technical Problem

Embodiments described herein aim to provide a fluorescent screen which maintains afterglow characteristics and has a high light output.

### Solution to Problem

An embodiment provides a fluorescent screen configured to convert X-rays to visible light and comprising a first layer, a second layer and a third layer provided between the first layer and the second layer and containing a phosphor. The phosphor is formed of europium-activated barium fluorochloride. A weight of the phosphor is greater than or equal to 300 mg/cm² and less than or equal to 600 mg/cm². A total light transmittance of each of the first layer and the second layer for an emission wavelength 380 nm of the phosphor is greater than or equal to 70%.

### Brief Description of Drawings

FIG. 1 is a perspective view schematically showing an X-ray inspection device according to the present embodiment.
FIG. 2 is a schematic cross-sectional view showing the configuration of scattering X-ray detectors according to the present embodiment.
FIG. 3 is a schematic diagram showing the configuration of a transmissive X-ray detector according to the present embodiment.
FIG. 4 is a schematic cross-sectional view showing a fluorescent screen according to the present embodiment.
FIG. 5 is a diagram showing the relationship between the concentration of the europium of a phosphor and the relative light output of the fluorescent screen according to the present embodiment.
FIG. 6 is a diagram showing the relationship between the europium concentration of the phosphor and the afterglow characteristics of the fluorescent screen according to the present embodiment.
FIG. 7 is a diagram showing the relationship between the phosphor weight of a phosphor layer and the relative light output according to the present embodiment.
FIG. 8 is a diagram showing the relationship between the phosphor weight of the phosphor layer and the relative light output according to the present embodiment.

### Mode for Carrying Out the Invention

Embodiments will be described hereinafter with reference to the accompanying drawings. In the drawings, the same numbers are added to the same portions, detailed description thereof being omitted unless necessary. Different portions are explained. It should be noted that the drawings are schematic or conceptual. The relationship between the thickness and width of each portion, the ratio of the size between portions and the like are not necessarily the same as the reality. Further, even if the same portion is shown, the dimensions or ratio may be shown in a different way depending on the figure.

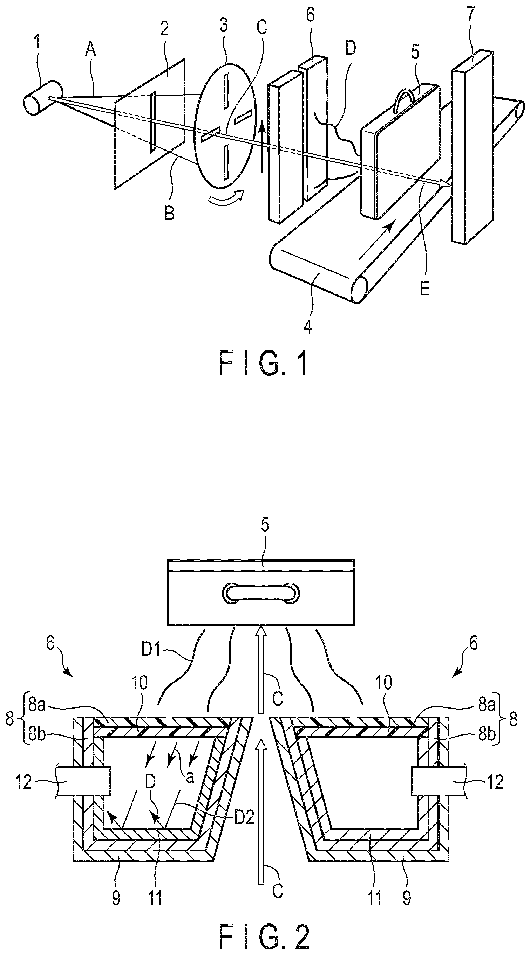

FIG. 1 is a perspective view schematically showing an X-ray inspection device according to the present embodiment. In FIG. 1, the X-ray inspection device comprises an X-ray tube 1 as an X-ray irradiation portion. The X-ray tube 1 emits X-rays in a range where the X-ray tube voltage is greater than or equal to 140 kV and less than or equal to 180 kV. More desirably, the X-ray tube voltage is 160 kV. Conventionally, the X-ray tube voltage is 120 kV. However, clearer images can be obtained by applying a value greater than the conventional X-ray tube voltage by using the fluorescent screen of the present embodiment described later. The emitted X-ray A is collimated by a slit having a predetermined width in a linear collimator 2. The collimated X-ray B is shaped into a pencil beam form which repeatedly performs a linear motion by a rotary collimator 3 in which a plurality of slits are provided in a radial direction. The X-ray C having a pencil beam shape is applied to, for example, the target object which moves on a conveyor 4, for example, baggage 5, while scanning it. The baggage 5 moves at a speed based on the detection sensitivity of the X-ray.

X-rays reflected on the baggage 5, in other words, Compton scattering X-rays D, are detected by a scattering X-ray detector 6. X-rays E which passed through the baggage 5 are detected by a transmissive X-ray detector 7. The Compton scattering X-rays D detected by the scattering X-ray detector 6 and the transmissive X-rays E detected by the transmissive X-ray detector 7 are measured as successive intensity values. In accordance with this X-ray intensity, an image of the state of the inside of the baggage 5 is created and displayed on a display portion (not shown) such as a liquid crystal display. The inside of the baggage 5 is inspected by the displayed image.

FIG. 2 is a schematic cross-sectional view showing the configuration of the scattering X-ray detectors 6 according to the present embodiment. As shown in FIG. 2, two scattering X-ray detectors 6 are provided so as to have a space for the passage of X-rays C having a pencil beam shape between them. The provision or number of scattering X-ray detectors 6 is not limited to this example, and should be set for allowing the passage of X-rays C and the incidence of the scattering X-rays from the baggage 5.

Each of the scattering X-ray detectors 6 comprises a detector body 8 having a housing shape. The detector body 8 comprises an X-ray incident portion 8a which Compton scattering X-rays D enter on a surface facing the baggage 5. The X-ray incident portion 8a is formed of a material which transmits X-rays, for example, resin. The other portion 8b of the detector body 8 excluding the X-ray incident portion 8a is formed of, for example, aluminum, to maintain the strength of the detector body 8. The other portion 8b has a surface which inclines with respect to the surface of the X-ray incident portion 8a. These surfaces of the two scattering X-ray detectors 6 are provided so as to face each other and form a space for the passage of X-rays C. The outer surface of the other portion 8b of each detector body 8 is covered with an X-ray shield member 9 formed of lead etc., to eliminate the effect of X-rays from the outside. On the inner side of the X-ray incident portion 8a, a transmissive fluorescent screen 10 whose light emission direction faces the inside of the detector body 8 is provided. On the inner side of the other portion 8b of the detector body 8, a reflective fluorescent screen 11 is provided. On the other surface which makes a right angle with the surface of the X-ray incident portion 8a, a photomultiplier 12 is provided as a photoelectric conversion portion. The photomultiplier 12 has the peak of light receiving sensitivity around 400 nm. For example, R-1307 (product name) manufactured by Hamamatsu Photonics K.K., is used. It should be noted that the configuration or shape of the detector body 8, the type of the photomultiplier 12 or the like is not limited to this example.

Compton X-rays D1 which entered the X-ray incident portion 8a of each detector body 8 are applied to the transmissive fluorescent screen 10. By the application of Compton scattering X-rays D1, the transmissive fluorescent screen 10 emits visible light a based on the selected phosphor. Visible light a is emitted to the inside of the detector body 8. By the application of Compton scattering X-rays D2 which passed through the X-ray incident portion 8a and the fluorescent screen 10, the reflective fluorescent screen 11 emits visible light b based on the selected phosphor. Visible light b is emitted to the inside of the detector body 8. The photomultiplier 12 detects visible light a and visible light b, and the total intensity of visible light a and visible light b is measured. In this manner, the intensity of the Compton scattering X-rays which entered the scattering X-ray detector 6 is obtained. By detecting the Compton scattering X-rays, an object which mainly consists of an element having a small atomic number, for example, a plastic good, can be distinguished.

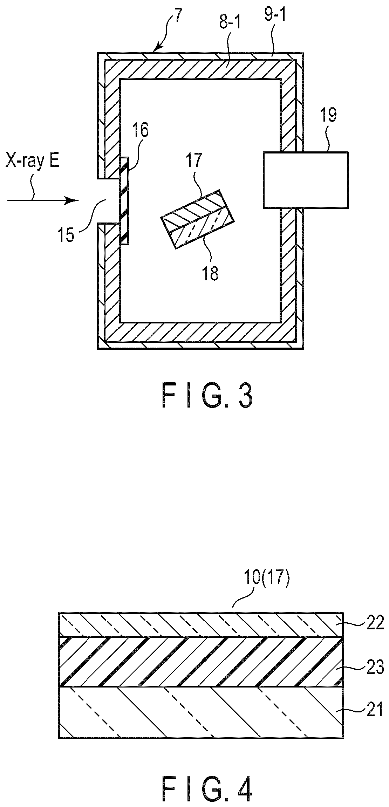

FIG. 3 is a schematic diagram showing the configuration of the transmissive X-ray detector 7 according to the present embodiment. The transmissive X-ray detector 7 is provided such that X-rays E which passed through the target object enter a slit-like window 15 provided in the transmissive X-ray detector 7. The transmissive X-ray detector 7 comprises the window 15 which is a long and thin slit such that X-rays E which passed through the target object effectively enter the inside of the transmissive X-ray detector 7. The window 15 is covered with a material 16 in which the X-ray absorption is less, for example, a plastic film or a carbon plate. A fluorescent screen 17 is provided on a provision plate 18 provided inside the transmissive X-ray detector 7. The provision plate 18 should be preferably transparent such that the light emitted from the fluorescent screen 17 to the provision plate 18 side by the irradiation of X-rays E is effectively extracted. To effectively emit light, the fluorescent screen 17 is provided so as to incline with respect to the irradiation direction of X-rays E and increase the area to be irradiated. The other portion of the transmissive X-ray detector 7 excluding the window 15 is formed of, for example, aluminum, to maintain the strength. The inner surface of the transmissive X-ray detector 7 is white to reflect light and condense light onto a photomultiplier 19, and is formed of, for example, a white paint or white film. The outer surface of the other portion of a detector body 8-1 excluding the window 15 is covered with an X-ray shield member 9-1 formed of lead etc., to eliminate the effect of X-rays from the outside. The photomultiplier 19 is provided in the transmissive X-ray detector as a photoelectric conversion means. The photomultiplier 19 has the peak of light receiving sensitivity around 400 nm. For example, R-1307 (product name) manufactured by Hamamatsu Photonics K.K., is used. It should be noted that the configuration or shape of the transmissive X-ray detector 7, the type of the photomultiplier 19 or the like is not limited to this example. As described above, the fluorescent screens 10 and 17 which convert X-rays to visible light are provided in the scattering X-ray detector 6 and the transmissive X-ray detector 7. The fluorescent screens 10 and 17 are explained below.

FIG. 4 is a schematic cross-sectional view showing the fluorescent screen 10 according to the present embodiment. In the present embodiment, the transmissive fluorescent screen 10 used for each scattering X-ray detector 6 is explained. It should be noted that the fluorescent screen 17 of the transmissive X-ray detector 7 may have a similar structure and shape. As shown in FIG. 4, the fluorescent screen 10 includes, for example, a support body (first layer) 21, a protective layer (second layer) 22 and a phosphor layer (third layer) 23. The phosphor layer 23 contains, for example, phosphor particles and a binder. The binder is a resinous binder in general, and various types of organic resins are used. The phosphor layer 23 is formed by applying slurry in which phosphor particles, a binder and an organic solvent are mixed together onto the support body 21.

The phosphor layer 23 contains phosphor particles formed of an europium-activated barium fluorochloride phosphor BaFCl:Eu. Part of europium may be replaced by Ce, Yb, etc. Part of fluorine and chlorine may be replaced by Br, I, etc. In each scattering X-ray detector 6, normally, the photomultiplier 12 having spectral sensitivity characteristics around 400 nm is used. For this reason, as a phosphor which converts X-rays to visible light, a phosphor having the peak of emission wavelength around 400 nm is preferable for the combination with the photomultiplier 12. The emission spectrum of the europium-activated barium fluorochloride phosphor has the peak of the emission wavelength around 380 nm, and further has a broad waveform. Thus, the affinity for the photomultiplier 12 is good. By using the europium-activated barium fluorochloride phosphor, an X fluorescent screen having a high efficiency for the conversion from X-rays to visible light and a high output can be provided.

The weight of the phosphor contained in the phosphor layer 23 per unit area should be preferably greater than or equal to 300 mg/cm² and less than or equal to 600 mg/cm². If the weight of the phosphor is less than 300 mg/cm², the element ability of the fluorescent screen 10 is inferior with respect to the irradiation X-rays applied at an X-ray tube voltage of 160 kV. Therefore, part of irradiation X-rays whose wavelengths were not converted to visible light in the phosphor layer 23 gets into the photomultiplier 19 and generates noise. As a result, the S/N ratio of the X-ray detector is degraded. If the weight exceeds 600 mg/cm², the light output is decreased. The reason for this is considered as follows. The passage of X-rays becomes difficult as the thickness of the phosphor layer 23 is increased. Alternatively, visible light generated by the irradiation of X-rays does not easily reach the photomultiplier 19 because of the self-absorption of the phosphor layer 23. In the range of the phosphor weight greater than or equal to 300 mg/cm² and less than or equal to 600 mg/cm², the light output is increased. In a case where the light output obtained when irradiation X-rays having an X-ray tube voltage of 120 kV is applied by using a conventional fluorescent screen in which the phosphor weight per unit area is less is 100%, a relative light output greater than or equal to 150% can be obtained by emitting irradiation X having an X-ray tube voltage of 160 kV with the use of the fluorescent screen 10 having the phosphor weight of the present embodiment. Thus, compared to the conventional fluorescent screen, a light output greater than or equal to 1.5 times can be obtained. This is because the fluorescent screen 10 of the present embodiment can efficiently and effectively perform a wavelength conversion to visible light with respect to irradiation X-rays having a greater intensity than the conventional art. It should be noted that a relative light output equivalent to a case where the X-ray tube voltage is 160 kV can be obtained in a range where the X-ray tube voltage is 140 kV to 180 kV as well by using the fluorescent screen 10 having the phosphor weight of the present embodiment. Details are explained in the examples described later.

Regarding the manufacturing method of this fluorescent screen 10, especially, the manufacturing method of the phosphor layer 23, various experiments and examinations, such as the development of phosphor solvents and the enhancement of application conditions, were conducted. As a result, by setting the solvent of the phosphor solution such that the boiling point is less than or equal to 100°C, and further, the amount of the solvent is 2/3 of the conventional art, and decreasing the line rate to 1/3 as an application condition, the phosphor layer 23 which is sufficiently dried can be formed on the support body 21 in a case where the phosphor weight is greater than or equal to 300 mg/cm² as well. In the conventional manufacturing method, when the phosphor layer 23 in which the phosphor weight is great, in other words, the thickness is great, is formed, insufficient drying occurs in the drying process after the application of the phosphor layer 23 to the support body, and thus, the fluorescent screen 10 cannot be manufactured.

The average particle diameter of the particles of the europium-activated barium fluorochloride phosphor of the phosphor layer 23 should be preferably greater than or equal to 3 µm and less than or equal to 6 µm. Since transparency is imparted to the phosphor layer 23 by increasing the average particle diameter of the phosphor particles, visible light obtained by conversion from X-rays can be extracted to the outside of the fluorescent screen 10 without being absorbed inside the phosphor layer 23. For this reason, the light output of the fluorescent screen 10 can be increased. To the contrary, when the average particle diameter is great, a demerit in which the yield in the phosphor manufacturing is decreased occurs. In consideration of the above matters, the average particle diameter should be preferably less than or equal to 6 µm. When the average particle diameter is less, visible light attenuates in the phosphor layer 23 by the self-absorption of the phosphor layer 23. Thus, the light output of the fluorescent screen 10 is decreased. Therefore, the average particle diameter should be preferably greater than or equal to 3 µm.

The concentration of the europium of the europium-activated barium fluorochloride phosphor should be preferably greater than or equal to 0.3% by weight and less than or equal to 1.5% by weight. When X-rays having an X-ray tube voltage of 140 kV to 180 kV are applied in this concentration range, a relative light output exceeding 140% can be obtained. It should be noted that the relative light output is calculated on the assumption that the light output measured at an X-ray tube voltage of 160 kV by using a conventional fluorescent screen is 100%. Details are explained in the examples described later.

In general, regarding the afterglow characteristics of the phosphor used for the X-ray inspection device, it is preferable that the light output of the fluorescent screen 10 after a lapse of 20 ms from the irradiation of X-rays should be less than or equal to 0.06% of the time of irradiation. With this value, a clear image which does not have an image lag can be obtained in the X-ray inspection device. In the present embodiment, the concentration of europium in which the light output shows 0.06% or less is greater than or equal to 0.3% by weight, and desirable afterglow characteristics are shown in this range. Thus, in consideration of the maintenance of the relative light output of the fluorescent screen 10 and the afterglow characteristics of the phosphor, the europium concentration range of the phosphor should be preferably greater than or equal to 0.3% by weight and less than or equal to 1.5% by weight.

In the present embodiment, the support body 21 and the protective layer 22 should preferably have light transmitting property. The total light transmittances of the support body 21 and the protective layer 22 should be desirably greater than or equal to 70%, and should be more desirably greater than or equal to 85% to obtain a greater light output. When the total light transmittance is less than 70%, the light output of the fluorescent screen 10 is decreased. In a conventional fluorescent screen, a support body having light reflectivity is provided. The light emitted in the phosphor layer is guided to the protective layer side provided on a side opposite to the support body by using the reflection of the support body, and the amount of light which reaches the photomultiplier is increased. For the material of the support body, a white film in which the light reflectance is greater than or equal to 70% is used. However, when the emitted light is reflected on the support body and guided to the protective layer side, self-absorption occurs in the phosphor layer. Thus, a certain amount of light is lost. In the present embodiment, since the support body 21 and the protective layer 22 have light transmitting property, the light emitted in the phosphor layer 23 can be extracted to the outside of the fluorescent screen 10 through the support body 21 and the protective layer 22. Thus, the fluorescent screen 10 can obtain a high light output. For the materials of the support body 21 and the protective layer 22, materials having light transmitting property, such as a transparent plastic film, can be used. For example, transparent polyethylene terephthalate should be preferably used.

The thicknesses of the support body 21 and the protective layer 22 should be preferably greater than or equal to 188 µm and less than or equal to 350 µm. When the thicknesses of the support body 21 and the protective layer 22 are less than 188 µm, the strength of the fluorescent screen 10 cannot be maintained, and thus, the fluorescent screen 10 is easily broken. It should be noted that the thicknesses of the support body 21 and the protective layer 22 are sufficient with 350 µm in terms of the strength. An unnecessary increase in the thicknesses is undesirable as it may increase the volume of the X-ray detector.

This specification explains examples of the fluorescent screen 10 of the present embodiment, comparative examples and the evaluation results of these examples.

### (Example A)

The fluorescent screen 10 was prepared by applying slurry in which a phosphor is mixed with a binder and an organic solvent onto a support body 13 formed of transparent polyethylene terephthalate having light transmitting property by a knife coater etc., drying the slurry, forming the phosphor layer 23 and laminating the protective layer 22 formed of transparent polyethylene terephthalate having light transmitting property on the phosphor layer 23 through a pressing machine etc. For the phosphor, europium-activated barium fluorochloride was used. The average particle diameter was set so as to be 4 µm, and the concentration of europium was set so as to be 0.75% by weight. The phosphor weight of the phosphor layer 23 was set so as to be 300 mg/cm², and the total light transmittances of the support body 21 and the protective layer 22 were set so as to be 70%.

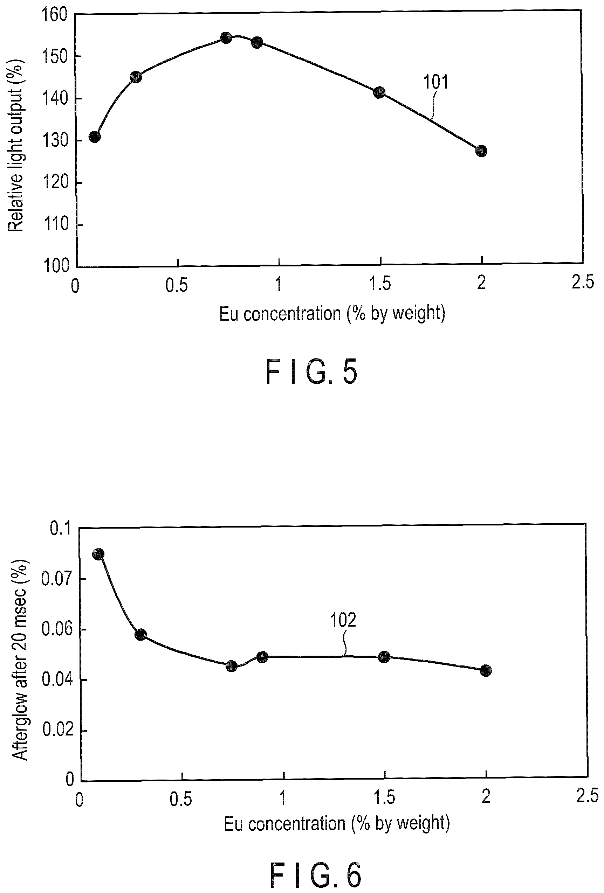

FIG. 5 shows the relationship between the concentration of the europium of the europium-activated barium fluorochloride phosphor of the phosphor layer 23 and the relative light output of the fluorescent screen 10. In the measurement of the relative light output, X-rays having an X-ray tube voltage of 160 kV were applied to the fluorescent screen 10. As the reference value of the relative light output, the value of the light output measured by applying irradiation X-rays having an X-ray tube voltage of 160 kV to a conventional fluorescent screen 10 in which the average particle diameter of the europium-activated barium fluorochloride phosphor is approximately 4 µm, and the phosphor weight of the phosphor layer 23 is 250 mg/cm², and the concentration of europium is 0.75% by weight, and the light reflectance of the support body 21 is 70%, was assumed to be 100%. The total light transmittance shows the light transmittance for 380 nm which is the dominant emission wavelength of the europium-activated barium fluorochloride phosphor. Line 101 indicates the measurement result. As shown in FIG. 5, when the concentration of the europium of the europium-activated barium fluorochloride phosphor is greater than or equal to 0.3% by weight and less than or equal to 1.5% by weight, the relative light output exceeds 140%. In addition, although not shown in the chart, when irradiation X-rays were applied while changing the X-ray tube voltage in the range of 140 kV to 180 kV in this range of concentration, similarly, the relative light output exceeded 140%.

FIG. 6 shows the relationship between the concentration of the europium of the europium-activated barium fluorochloride phosphor of the phosphor layer 23 and the afterglow characteristics of the fluorescent screen 10. In the measurement of afterglow, the light output of the fluorescent screen 10 after a lapse of 20 ms from the irradiation of X-rays was measured, and is shown by relative values for the light output 100% at the time of X-ray irradiation. Line 102 indicates the measurement result. As shown in FIG. 6, the concentration of europium in which the light output is less than or equal to 0.06% is greater than or equal to 0.3% by weight.

### (Example B)

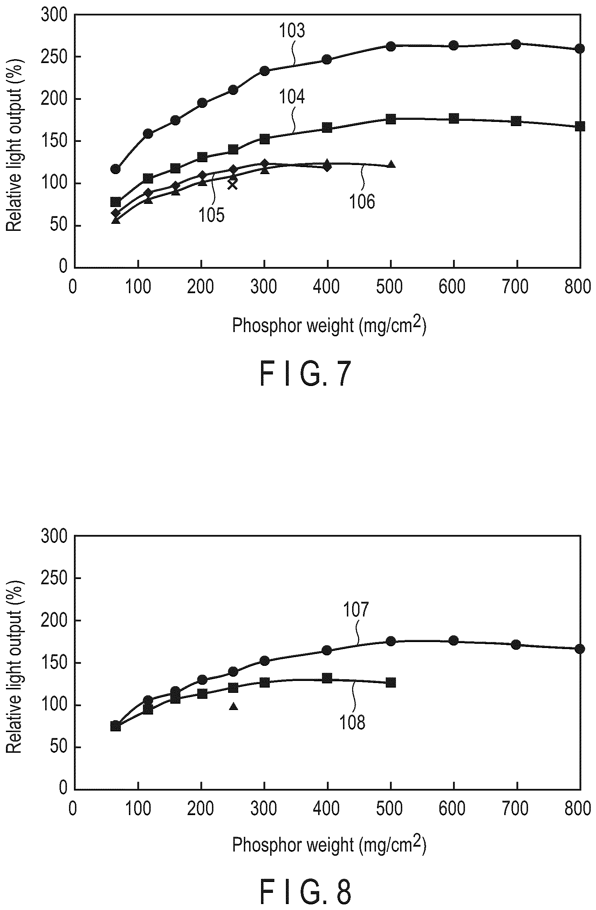

FIG. 7 shows the relationship between the phosphor weight of the phosphor layer 23 and the relative light output of the fluorescent screen 10 by comparing it with that of comparative examples. Chart 1 shows part of data plotted in FIG. 7 separately for the examples of the present embodiment and the comparative examples. In FIG. 7 and chart 1, in the measurement of the reference value, irradiation X-rays having an X-ray tube voltage of 120 kV were used by using a conventional fluorescent screen in which the average particle diameter of the europium-activated barium fluorochloride phosphor is approximately 4 µm, and the concentration of europium is 0.75% by weight, and the phosphor weight is 250 mg/cm², and the light reflectance of the support body 21 is 70%. Assuming that the measurement value of the light output of the X-ray detector in the measurement of the reference value is 100%, the relative values of the light output of the X-ray detectors of the examples and the comparative examples were measured. In the phosphor layer 23 of the examples, the average particle diameter of the europium-activated barium fluorochloride phosphor was set to as to be approximately 4 µm, and the concentration of europium was set so as to be 0.75% by weight, and the total light transmittances of the support body 21 and the protective layer 22 were set so as to be 70% (example 1 to example 4) or 85% (example 5 to example 8). Line 103 indicates the measurement result when the total light transmittance is 85%. Line 104 indicates the measurement result when the total light transmittance is 60%. The measurement was performed by using irradiation X-rays having an X-ray tube voltage of 160 kV. For the support body 21 and the protective layer 22, transparent polyethylene terephthalate was used, and the respective thicknesses were set so as to be 250 µm. In the comparative examples, measurement was performed by using a fluorescent screen in which the total light transmittances of the support body 21 and the protective layer 22 are 60%, and the other conditions are the same as the examples, and further, measurement was performed by using a fluorescent screen in which the light reflectance of the support body 21 is 70%, and the other conditions are the same as the examples. Line 105 indicates the measurement result when the light reflectance is 70%. Line 106 indicates the measurement result when the total light transmittances are 60%.

**Table 1**

| | Phosphor | X-ray tube voltage (kV) | Total light transmittances of protective film and support body (%) | Phosphor weight (mg/cm²) | Relative light output (%) |
|---|---|---|---|---|---|
| Example 1 | BaFCl:Eu | 160 | 70 | 300 | 154 |
| Example 2 | | | | 400 | 167 |
| Example 3 | | | | 500 | 178 |
| Example 4 | | | | 600 | 178 |
| Example 5 | | | 85 | 300 | 234 |
| Example 6 | | | | 400 | 249 |
| Example 7 | | | | 500 | 265 |
| Example 8 | | | | 600 | 266 |
| Comparative example 1 | BaFCl:Eu | 120 | Reflectance of support body 70% | 250 | 100 |
| Comparative example 2 | | 160 | Reflectance of support body 70% | 250 | 117 |

As shown in FIG. 7 and chart 1, in example 1 to example 8, each fluorescent screen in which the total light transmittances of the support body 21 and the protective layer 22 are 85% shows higher values in the relative light output than each fluorescent screen in which the total light transmittances are 70%. The relative light output increases as the phosphor weight of the phosphor layer 23 increases. When the phosphor weight is greater than or equal to 300 mg/cm², the relative light output is greater than or equal to 150%. When the weight of the phosphor is 500 to 600 mg/cm², the relative light output is maximum. When the weight of the phosphor exceeds 600 mg/cm², the relative light output is decreased.

In FIG. 7, as the weight of the phosphor decreases from 300 mg/cm², the relative light output decreases, and eventually falls below 150%.

Regarding the fluorescent screens of the comparative examples, both the fluorescent screen in which the total light transmittances of the support body 21 and the protective layer 22 are 60% and the other conditions are the same as the examples and the fluorescent screen in which the light reflectance of the support body 21 is 70% and the other conditions are the same as the examples show the maximum relative light output when the weight of the phosphor is approximately 300 mg/cm². When the weight of the phosphor exceeds 300 mg/cm², the relative light output shows a certain value or is decreased. The maximum values of the relative light output are approximately 130% and show lower values than example 1 to example 8.

Regarding the manufacturing method of the phosphor layer 23 in example 1 to example 8, the boiling point of the solvent of the phosphor solution was set so as to be less than or equal to 100°C, and further, the amount of the solvent was set so as to be 2/3 of the conventional art. Moreover, as an application condition, the line rate was decreased to 1/3. In this manner, the phosphor layer 23 which has a phosphor weight of 300 mg/cm² or greater and has been sufficiently dried could be obtained.

In example 1 to example 8, measurement was carried out regarding a case where the X-ray tube voltage is 160 kV. Regarding a case where the X-ray tube voltage is greater than or equal to 140 kV and less than or equal to 180 kV, a similar experiment was conducted. As a result, the relative light output of the fluorescent screen 10 showed a value equivalent to a case where the X-ray tube voltage is 160 kV (not shown).

### (Example C)

FIG. 8 shows the relationship between the phosphor weight of the phosphor layer 23 and the relative light output of the fluorescent screen 10 when the X-ray tube voltage is 120 kV and 160 kV. In a manner similar to that of example 1 to example 4, regarding the fluorescent screen 10, the average particle diameter of the europium-activated barium fluorochloride phosphor was set so as to be approximately 4 µm, and the concentration of europium was set so as to be 0.75% by weight, and the total light transmittances of the support body 21 and the protective layer 22 were set so as to be 70%. The measurement was performed by using irradiation X-rays having an X-ray tube voltage of 120 kV or 160 kV. As the reference value of the relative light output, the measurement value of the light output measured by using irradiation X-rays having an X-ray tube voltage of 120 kV with the use of a fluorescent screen in which the average particle diameter of the europium-activated barium fluorochloride phosphor is approximately 4 µm, and the concentration of europium is 0.75%, and the phosphor weight is 250 mg/cm², and the light reflectance of the support body 21 is 70%, was assumed to be 100%. Line 107 indicates the measurement result when the X-ray tube voltage is 160 kV. Line 108 indicates the measurement result when the X-ray tube voltage is 120 kV. In a case where the X-ray tube voltage is 120 kV, the relative light output is maximum when the phosphor weight is 300 mg/cm² to 400 mg/cm², and further, this value is approximately 130%, and the relative light output is decreased when the phosphor weight exceeds 400 mg/cm². To the contrary, in a case where the X-ray tube voltage is 160 kV, the relative light output is greater than or equal to 150% in the fluorescent screen 10 in which the phosphor weight is greater than or equal to 300 mg/cm² and less than or equal to 600 mg/cm².

In the present embodiment, the phosphor layer 23 of the fluorescent screen 10 should preferably contain europium-activated barium fluorochloride. The phosphor weight should be preferably greater than or equal to 300 mg/cm² and less than or equal to 600 mg/cm². For the support body 21 and the protective layer 22, the total light transmittance should be preferably greater than or equal to 70% relative to the dominant emission wavelength 380 nm of the phosphor. In this case, the relative light output of the fluorescent screen 10 is 1.5 times a conventional fluorescent screen as the reference value. Thus, an X-ray detector which has good afterglow characteristics and a less S/N ratio and an X-ray inspection device which can obtain clear images can be obtained.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### Explanation of Reference Signs

1 ... X-ray tube, 2 ... Linear collimator, 3 ... Rotary collimator, 4 ... Conveyor, 5 ... Baggage, 6 ... Scattering X-ray detector, 7 ... Transmissive X-ray detector, 8 ... Detector body, 8a ... X-ray incident portion, 8b ... Other portion, 9 ... X-ray shield member, 10, 11, 17 ... Fluorescent screens, 12, 19 ... Photomultipliers, 15 ... Window, 16 ... Material, 18 ... Provision plate, 21 ... Support body, 22 ... Protective layer, 23 ... Phosphor layer

## Claims

1. A fluorescent screen configured to convert X-rays to visible light, comprising:
a first layer;
a second layer; and
a third layer provided between the first layer and the second layer and containing a phosphor, wherein
the phosphor is formed of europium-activated barium fluorochloride,
a weight of the phosphor in the third layer is greater than or equal to 300 mg/cm² and less than or equal to 600 mg/cm², and
a total light transmittance of each of the first layer and the second layer for an emission wavelength 380 nm of the phosphor is greater than or equal to 70%.

2. The X-ray fluorescent screen of claim 1, wherein
a thickness of each of the first layer and the second layer is greater than or equal to 188 µm and less than or equal to 350 µm.

3. The X-ray tube fluorescent screen of claim 1, wherein
an average particle diameter of the phosphor is greater than or equal to 3 µm and less than or equal to 6 µm.

4. The X-ray fluorescent screen of claim 1, wherein
an europium concentration of the phosphor is greater than or equal to 0.3% by weight and less than or equal to 1.5% by weight.

5. The X-ray fluorescent screen of claim 1, wherein
each of the first layer and the second layer contains polyethylene terephthalate.

6. The X-ray fluorescent screen of claim 1, wherein
the first layer is a support body, and the second layer is a protective layer, and the third layer is a phosphor layer.

7. An X-ray detector comprising:
a detector body comprising an incident portion of X-rays;
a fluorescence generation means which comprises the fluorescent screen provided in the incident portion and recited in one of claim 1 to claim 6; and
a photoelectric conversion means provided in the detector body.

8. An X-ray inspection device comprising:
an X-ray irradiation means which irradiates a target object with X-rays;
an X-ray detection means which comprises the X-ray detector of claim 7 and detects transmissive X-rays or Compton scattering X-rays from the target object; and
a means for creating an image of inside of the target object based on an X-ray strength measured by the X-ray detection means.
